# EUROPÄISCHE PATENTSCHRIFT

(11) **EP 0 939 852 B1**
(45) Veröffentlichungstag und Bekanntmachung des Hinweises auf die Patenterteilung: **17.07.2002**
(21) Anmeldenummer: 97949939.9
(22) Anmeldetag: 17.11.1997
(51) Int. Cl.: E05B 47/00, E05B 65/20, H02K 7/06, F16D 35/00

(54) **ANTRIEBSEINRICHTUNG FÜR EIN KRAFTFAHRZEUG-TÜRSCHLOSS OD. DGL.**
DRIVE DEVICE FOR A MOTOR VEHICLE DOOR LOCK OR THE LIKE
DISPOSITIF D'ENTRAINEMENT POUR SERRURE DE PORTE DE VEHICULE AUTOMOBILE OU ANALOGUE

(30) Priorität: 19.11.1996 DE 19647675; 29.11.1996 DE 19649548
(43) Veröffentlichungstag der Anmeldung: 08.09.1999
(73) Patentinhaber: ROBERT BOSCH GMBH, 70442 Stuttgart (DE)
(72) Erfinder: REICHMANN, Siegfried, D-42929 Wermelskirchen (DE); WOLF, Erwin, D-71352 Winnenden (DE)
(86) Internationale Anmeldenummer: DE9702692
(87) Internationale Veröffentlichungsnummer: WO9822679

(56) Entgegenhaltungen:
- EP-A- 0 064 942
- EP-A- 0 287 860
- WO-A-96/20353
- DE-A- 4 413 719
- GB-A- 2 026 592
- US-A- 4 160 389
- PATENT ABSTRACTS OF JAPAN vol. 97, no. 7, 31.Juli 1997 & JP 09 088395 A (AISIN SEIKI CO LTD ), 31.März 1997,

## Beschreibung

Die Erfindung betrifft eine Antriebseinrichtung für ein Kraftfahrzeug-Türschloß od. dgl., also auch ein Kraftfahrzeug-Heckklappenschloß oder -Hecktürschloß oder -Klappenschloß, mit den Merkmalen des Oberbegriffs von Anspruch 1.

Eine bekannte Antriebseinrichtung für ein Kraftfahrzeug-Türschloß od. dgl. ist einfach aufgebaut und erlaubt eine einfache Hilfsbetätigung von Hand bei Ausfall des elektromotorischen Antriebs (US - A - 5,240,296). Bei dieser Antriebseinrichtung ist das Getriebe als Schneckenradgetriebe ausgeführt mit Schnecke und Schneckenrad, wobei vom Schneckenrad exzentrisch in Achsrichtung ein Mitnehmerzapfen abragt, der in eine gabelförmige Aufnahme eines Betätigungshebels eingreift und diesen in eine Sicherungsstellung bzw. Entsicherungsstellung umwirft. Im Ruhezustand befindet sich der Mitnehmerzapfen außerhalb der gabelförmigen Aufnahme, so daß dann der Betätigungshebel von Hand zwischen Sicherungsstellung und Entsicherungsstellung hin und her bewegt werden kann. Bei Ausfall des elektromotorischen Antriebs in dieser Ruhestellung kann also das Schloß auch von Hand, d.h. z.B. von einem Schließzylinder ausgehend, gesichert oder entsichert werden.

Dem Betätigungshebel sind bei diesem Stand der Technik Anschläge für die Sicherungsstellung und die Entsicherungsstellung zugeordnet. Die eigentliche Betätigung des elektromotorischen Antriebs erfolgt aber nicht durch Anlaufen an diese Anschläge, sondern durch Mikroschalter.

Ein Problem bei dieser Antriebseinrichtung ist ein Ausfall der elektrischen Energie während des Laufens des elektromotorischen Antriebs. Dann kann es nämlich passieren, daß der Mitnehmerzapfen am Schneckenrad innerhalb der gabelförmigen Aufnahme stehenbleibt, dort blockiert ist und so das gesamte Türschloß blockiert. Zumeist ist es nämlich nicht möglich, den elektromotorischen Antrieb so auszuführen, daß er auch in dieser Situation nicht selbsthemmend wirkt, also unter Aufbringung entsprechender Kraft von Hand rückgestellt werden kann.

Will man den elektromotorischen Antrieb durch sogenannten "Blockbetrieb" steuern, d.h. durch Feststellung der Stromaufnahme beim Anlaufen des Mitnehmerzapfens an Anschlagflächen seitlich der gabelförmigen Aufnahme (DE - A - 44 39 479), so ist das zwar motorisch-steuerungstechnisch vorteilhaft, das zuvor erläuterte Problem des Ausfalls des Antriebs während der Funktion ist damit nicht gelöst. Hinzu kommt, daß der Schlag beim Anlaufen des Mitnehmerzapfens an die Anschlagfläche hart ist, was einen beachtlichen Verschleiß und vorzeitigen Ausfall der Antriebseinrichtung zur Folge haben kann und kurzzeitig den Strom sehr stark ansteigen läßt (6 bis 8 A). Die elastische Ausbildung entsprechender Anschläge hilft da auch nicht immer weiter (EP - A - 0 684 356).

Anhand der GB-A-2 026 592 ist eine Antriebseinrichtung entsprechend dem Oberbegriff des Anspruchs 1 vorbekannt.

Der Erfindung liegt die Aufgabe zugrunde, eine Antriebseinrichtung der in Rede stehenden Art so auszugestalten und weiterzubilden, daß bei Stromausfall oder Spannungsabfall, also Ausfall des elektromotorischen Antriebs und/oder bei hoher Selbsthemmung des Getriebes auf möglichst einfache und dauerhaft funktionssichere Weise eine Betätigung von Hand bzw. von außen erfolgen kann. Gleichzeitig soll möglichst ein ruhiger sanfter Anlauf des elektromotorischen Antriebs und ein möglichst weicher Anlauf in den Block bei Realisierung eines Blockbetriebs gewährleistet sein.

Die zuvor aufgezeigte Aufgabe ist bei einer Antriebseinrichtung für ein Kraftfahrzeug-Türschloß od. dgl. mit den Merkmalen des Oberbegriffs von Anspruch 1 durch die Merkmale des kennzeichnenden Teils von Anspruch 1 gelöst.

Anders als bei den Getrieben von vielen gebräuchlichen Antriebseinrichtungen wird zwischen Antriebsseite und Abtriebsseite keine feste Kupplung realisiert, sondern eine im Kupplungsgrad veränderliche Kupplung. Das Getriebe hat also je nach Drehzahl unterschiedlich viel Schlupf. Bei hoher Drehzahl ergibt sich ein geringer Schlupf, bei geringer Drehzahl soll sich ein relativ hoher Schlupf realisieren lassen. Wie hoch der Schlupf ist, hängt natürlich von der jeweils wirksamen Gegenkraft ab. Besonders bedeutsam ist die Lehre der Erfindung dann, wenn die Kupplungscharakteristik der Kupplung unabhängig von der Kraftflußrichtung ist.

Mit der erfindungsgemäßen Lehre wird eine in jeder Hinsicht unproblematische Hilfsbetätigung einer Antriebseinrichtung für ein Kraftfahrzeug-Türschloß od. dgl. realisiert. Läuft der motorische, insbesondere elektromotorische Antrieb mit relativ hoher Drehzahl an, so arbeitet die Kupplung mit hohem Kupplungsgrad und der Schlupf des Getriebes ist gering bzw. fast gleich null. Der Kraftfluß von der Antriebsseite zur Abtriebsseite ist hergestellt, der Betätigungshebel oder welches Antriebselement auch immer, das die Antriebsbewegung in die Schloßmechanik hinein transferiert, wird bestimmungsgemäß angetrieben. Fällt der motorische, insbesondere elektromotorische Antrieb aus, so kann beispielsweise der an der Abtriebsseite angekoppelte Betätigungshebel langsam von Hand bewegt werden, z.B. von einem Schließzylinder her, was einer geringen Drehzahl an der Abtriebsseite des Getriebes entspricht. Der dann gegebene geringe Kupplungsgrad bzw. große Schlupf führt dazu, daß der elektromotorische Antrieb gleichwohl stillstehen kann.

Ohne jedes Problem ist also eine Notbetätigung oder Hilfsbetätigung bei Stromausfall oder Spannungsabfall oder anderweit schwergängigem Getriebe realisiert.

Ein weiterer Vorteil liegt darin, daß bei Anlaufen des elektromotorischen Antriebs der Kupplungsgrad mit ansteigender Drehzahl ansteigt, also ein sanfter Anlauf realisiert ist. Wird eine Steuerung der Antriebseinrichtung durch "Blockbetrieb" realisiert, so wird der Anlauf des entsprechenden Mitnehmerzapfens od. dgl. an die Anschlagfläche durch die zuvor erläuterte Kupplungscharakteristik stark gedämpft, die Kupplung wirkt wie eine Anschlagdämpfung.

Im folgenden wird die Erfindung anhand einer lediglich ein Ausführungsbeispiel darstellenden Zeichnung näher erläutert. In der Zeichnung zeigt
- Fig. 1: eine Prinzipdarstellung einer Antriebseinrichtung für ein Kraftfahrzeug-Türschloß od. dgl.,
- Fig. 2: in einem in axialer Richtung liegenden Schnitt den Bereich des Getriebes der Antriebseinrichtung aus Fig. 1,
- Fig. 3: in einer Draufsicht den Gegenstand aus Fig. 2, jedoch ohne den dort dargestellten Deckel.

Die erfindungsgemäße Antriebseinrichtung ist bestimmt für ein Kraftfahrzeug-Türschloß od. dgl.. Dementsprechend ist diese Antriebseinrichtung auch bestimmt für ein Kraftfahrzeug-Klappenschloß, ein Kraftfahrzeug-Heckklappenschloß, ein Kraftfahrzeug-Hecktürschloß.

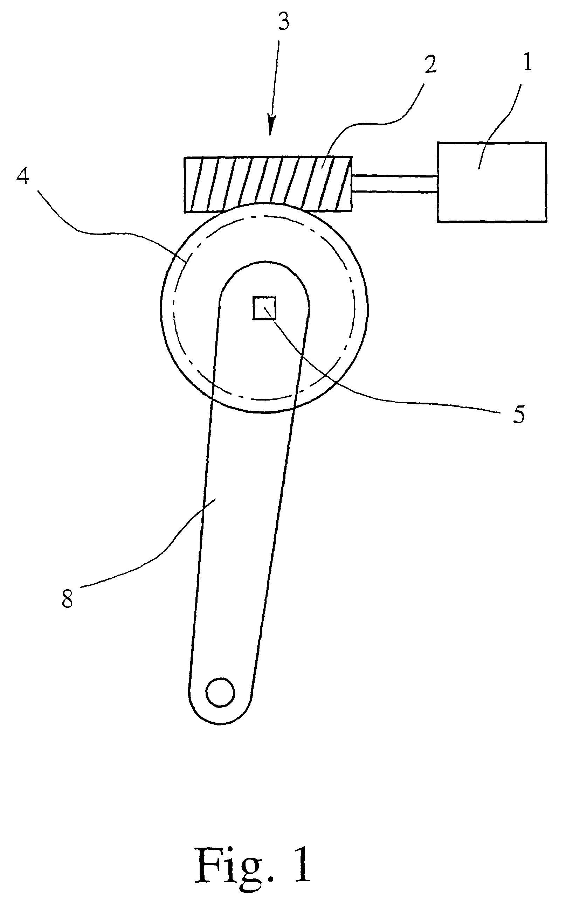

Fig. 1 zeigt in schematischer Darstellung ein Ausführungsbeispiel einer erfindungsgemäßen Antriebseinrichtung. Diese weist zunächst einen motorischen, hier elektromotorischen Antrieb 1 auf. Im Regelfall wird es sich bei dem elektromotorischen Antrieb 1 um einen elektrischen Kleinmotor handeln. Alternativen sind auch Hydraulikmotoren, Pneumatikantriebe od. dgl..

Die Antriebswelle des elektromotorischen Antriebs 1 arbeitet auf die Schnecke 2 eines hier als Schneckenradgetriebe ausgeführten Getriebes 3. Die Schnecke 2 steht mit dem Umfangs-Zahnkranz eines Schneckenrades 4 des Getriebes 3 in Eingriff. Das Getriebe 3 ist in dem dargestellten Ausführungsbeispiel (weitgehend) selbsthemmend.

Man erkennt, daß das Schneckenrad 4 einen Mitnehmer 5 antreibt, der im dargestellten Ausführungsbeispiel als Vierkantzapfen koaxial zum Schneckenrad 4 ausgeführt ist. Der Mitnehmer 5 trägt einen Betätigungshebel 8, der durch Funktion des Antriebs 1 in eine Sicherungsstellung und eine Entsicherungsstellung bewegt werden kann. Die Bewegung des Betätigungshebels 8 wirkt in die Schloßmechanik des nicht weiter dargestellten Kraftfahrzeug-Türschlosses hinein und führt dort zu entsprechender Sicherungsfunktion oder Entsicherungsfunktion. Die Funktion des Betätigungshebels 8 in der Schloßmechanik kann auch eine andere, beispielsweise eine Diebstahlsicherungsfunktion sein, das hängt von der jeweiligen Konstruktion des Kraftfahrzeug-Türschlosses ab, auf die es hier weiter nicht ankommt.

Das dargestellte Ausführungsbeispiel zeigt eine Ausführung der Antriebseinrichtung. bei der der elektromotorische Antrieb 1 im "Blockbetrieb" gesteuert wird. Der elektromotorische Antrieb 1 wird also durch Bestromung des Elektromotors eingeschaltet und wieder abgeschaltet, wenn der Elektromotor dadurch einen Überstrom zieht, daß der Betätigungshebel 8 in seiner weiteren Bewegung mechanisch irgendwie blokkiert wird, beispielsweise durch Anschläge, die auch an weiterführenden Hebeln der Schloßmechanik wirksam sein können.

Die Lehre der Erfindung ist nicht auf eine Funktion der Antriebseinrichtung im Blockbetrieb beschränkt. Vielmehr und besonders vorteilhaft ist die Lehre der Erfindung einsetzbar mit einem durch Mikroschalter oder Abtastung von Steuerkurven gesteuerten elektromotorischen Antrieb 1.

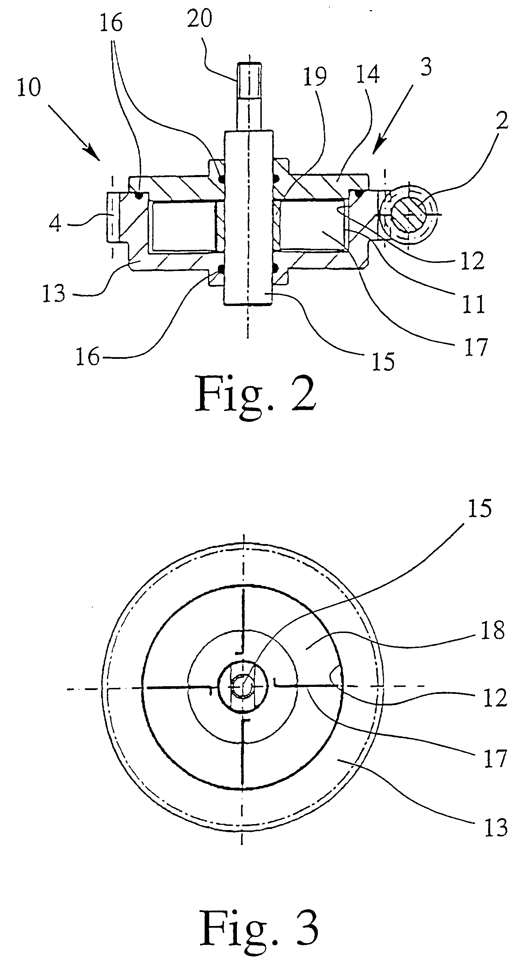

Fig. 2 läßt die Besonderheit der Lehre der Erfindung erkennen. Das Getriebe 3 mit Schnecke 2 und Schneckenrad 4 weist keine feste Kupplung auf, sondern realisiert, daß zwischen Antriebsseite und Abtriebsseite des Getriebes 3 eine im Kupplungsgrad veränderliche Kupplung 10 angeordnet ist, die bei hoher Drehzahl einen hohen Kupplungsgrad und bei geringer Drehzahl einen geringen Kupplungsgrad aufweist. Das dargestellte Ausführungsbeispiel zeichnet sich dabei besonders dadurch aus, daß die Kupplungscharakteristik der Kupplung 10 unabhängig von der Kraftflußrichtung ist.

Grundsätzlich wäre es auch möglich, mit einem von der Kraftflußrichtung abhängigen Kupplungsgrad zu arbeiten, das würde aber die Aufgabe, die der Lehre der Erfindung zugrundeliegt, nur zum Teil lösen können.

Eine die erfindungsgemäße Charakteristik aufweisende Kupplung 10 ist eine formschlüssige Kupplung, die bei hoher Drehzahl eingekuppelt, bei geringer Drehzahl ausgekuppelt ist.

Das dargestellte Ausführungsbeispiel zeigt jedoch die Ausführung der erfindungsgemäß realisierten Kupplung 10 in der Antriebseinrichtung für ein Kraftfahrzeug-Türschloß in kraftschlüssiger Weise, so daß die Kupplung 10 bei hoher Drehzahl einen geringen Schlupf und bei geringer Drehzahl einen hohen Schlupf aufweist.

Das dargestellte Ausführungsbeispiel zeichnet sich durch eine Ausführungsform der kraftschlüssigen Kupplung 10 aus, daß die Kupplung 10 als Fluidkupplung ausgeführt ist mit einem Fluid hoher relativer Viskosität, in dem sich ein Kupplungsteil bewegt. Bewegt sich das Kupplungsteil im Fluid, so wird dieser Bewegung in dem zähflüssigen Fluid relativ hoher Viskosität ein Bewegungswiderstand entgegengesetzt, der mit der Bewegungsgeschwindigkeit des Kupplungsteils im Fluid ansteigt. Je schneller sich das Kupplungsteil bewegt, höhere Drehzahl, desto höher ist der Bewegungswiderstand. Ganz langsam läßt sich das Kupplungsteil im Fluid praktisch widerstandsfrei oder mit sehr geringem Widerstand bewegen. Damit ist der veränderliche Kupplungsgrad realisiert.

Das dargestellte Ausführungsbeispiel zeichnet sich weiter dadurch aus, daß das Fluid durch eine Engstelle 11 mit geringem Strömungsquerschnitt, vorzugsweise durch mehrere Engstellen 11 gepreßt wird. Das Fluid ist zweckmäßigerweise zähflüssig, vorzugsweise mit einer Viskosität größer als 50.000 (relative Viskosität). Man kann beispielsweise ein klebriges viskoses Fett einsetzen, das bei 120°C eine relative Viskosität von 135.000 und bei -40°C eine relative Viskosität von 200.000 hat.

Fig. 2 zeigt lediglich das Getriebe 3 der Antriebseinrichtung mit der Kupplung 10 in einem axial liegenden Schnitt. Man erkennt zunächst die Schnecke 2 des Getriebes 3 und das Schneckenrad 4. Man erkennt ferner, daß die Kupplung 10 ein wannenartig ausgeführtes, einen Aufnahmeraum 12 für das Fluid bildendes erstes Kupplungsteil 13 mit einem dieses schließenden Deckel 14 und ein den Aufnahmeraum 12 zentrisch durchsetzendes, nach zumindest einer Seite axial nach außen abragendes zweites Kupplungsteil 15 aufweist. Mit Dichtungselementen 16 ist der Deckel 14 zum ersten Kupplungsteil 13 und das zweite Kupplungsteil 15 im ersten Kupplungsteil 13 abgedichtet, so daß das Fluid aus dem Aufnahmeraum 12 nicht austreten kann.

Bei dem Fluid sollte es sich aus Gründen des praktischen Einsatzes um ein zähflüssiges Material mit möglichst temperaturunabhängigen Eigenschaften jedenfalls im Bereich von 230 bis ca. 390 K, also von ca. -40°C bis ca. 120°C handeln. Die Dichtung zwischen Deckel 15 und erstem Kupplungsteil 13 kann auch dauerhaft, beispielsweise durch Ultraschallverschweißung der beiden Teile, realisiert sein.

Wesentlich ist ferner, daß das zweite Kupplungsteil 15 zumindest einen, hier und vorzugsweise mehrere im Aufnahmeraum 12 in das Fluid ragende Flügel 17 aufweist. Besonders zweckmäßig ist es dabei, daß zwischen den Flügeln 17 und der Wandung und/oder dem Boden und/oder der Decke des Aufnahmeraums 12 und/oder der Wandung des zweiten Kupplungsteils 15 Spalte vorgesehen sind, die die Engstellen 11 bilden. Alternativ oder zusätzlich können die Flügel 17 auch mit Durchbrechungen oder Bohrungen zur Bildung entsprechender Engstellen ausgeführt sein.

Im dargestellten Ausführungsbeispiel ist die Kupplung 10 so konstruiert, daß das zweite Kupplungsteil 15 eine kreisscheibenförmige Tragplatte 18 aufweist, von der etwa axial aufragen die Flügel 17, wobei diese selbst wiederum etwa radial ausgerichtet sind. Man erkennt in Fig. 3 in der Draufsicht und in Fig. 2, daß die Tragplatte 18, die im dargestellten Ausführungsbeispiel mitsamt der Flügel 17 als einteiliges Kunststoffteil ausgeführt ist, mittels einer Buchse 19, die ebenfalls Teil dieses Kunststoffteils ist, auf das als Abtriebswelle aus Metall ausgeführte zweite Kupplungsteil 15 aufgepreßt ist. Hier sind natürlich vielerlei andere Befestigungstechniken realisierbar, ebenso wie andere Materialien. Die Flügel 17 im Aufnahmeraum 12 können auch als dünne Metallbleche, beispielsweise 0,2 mm ausgeführt sein, wenn sich Kunststoffflügel als nicht hinreichend widerstandsfähig erweisen sollten.

Das dargestellte Ausführungsbeispiel zeigt das erste Kupplungsteil 13 im übrigen als das Schneckenrad 4 und das zweite Kupplungsteil 15 eben als zuvor erläuterte Abtriebswelle aus Metall. Man erkennt oben an der Abtriebswelle, die das zweite Kupplungsteil 15 bildet, das Verbindungsende 20, auf dem dann die Mitnehmerscheibe 5 von Fig. 1 aufgesteckt wird. Natürlich kann das Verbindungsende 20 auch in ganz anderer Weise in die Schloßmechanik hinein verbunden sein, das obliegt den konstruktiven Überlegungen eines Fachmannes.

Die Lehre der Erfindung setzt die Realisierung einer im Kupplungsgrad von der Drehzahl abhängigen Kupplung 10 voraus, die sowohl eine einfache Hilfsbetätigung bei Stromausfall oder Spannungsabfall als auch einen weichen Anlauf und einen gedämpften Blockanschlag bei Realisierung eines Blockbetriebs, gewährleistet.

Wird die Schnecke 2 vom elektromotorischen Antrieb 1 mit hoher Drehzahl angetrieben, so kann das Fluid praktisch nicht durch die Engstellen 11 im Aufnahmeraum gepreßt werden. Vom Fluid werden die Flügel 17 mitgenommen und mit ihnen das zweite Kupplungsteil 15, das so entsprechend mit dem Verbindungsende 20 letztlich den Betätigungshebel antreibt. Wird während dieses Vorganges der elektromotorische Antrieb 1 irgendwie stillgesetzt oder blockiert, so kann zunächst der Betätigungshebel 8 nicht weiterbewegt werden. Das kann aber dann von Hand, also beispielsweise von dem Schließzylinder des Schlosses selbst her direkt auf den Betätigungshebel 8 einwirkend erfolgen, wenn diese Betätigungsbewegung langsam vonstatten geht, also eine nur geringe Drehzahl auftritt. Dann nämlich lassen sich die Flügel 17 gegen den Widerstand des Fluids im Aufnahmeraum 12 bewegen, das Fluid durchtritt die Engstellen 11 und setzt den sich sehr langsam bewegenden Flügeln 17 nur einen geringen Widerstand entgegen. Die Notbetätigung oder Hilfsbetätigung kann also unproblematisch erfolgen.

Es liegt auf der Hand, daß entsprechende Anlauf- und Anschlagdämpfungen in gleicher Weise die Folge dieser Fluidkupplung sind.

## Patentansprüche

1. Antriebseinrichtung für ein Kraftfahrzeug-Türschloß o. dgl.
mit einem motorischen, insbesondere elektromotorischen Antrieb (1) und
einem Getriebe (3) mit einer Antriebsseite und mit einer Abtriebsseite, von der aus ein Betätigungshebel (8) o. dgl. einer Schloßmechanik angetrieben werden kann,
wobei zwischen der Antriebsseite und der Abtriebsseite des Getriebes (3) eine im Kupplungsgrad veränderliche Kupplung (10) angeordnet ist, die bei hoher Drehzahl einen hohen Kupplungsgrad und bei geringer Drehzahl einen geringen Kupplungsgrad aufweist,
wobei die Kupplung (10) kraftschlüssig ausgeführt ist und bei hoher Drehzahl einen geringen Schlupf und bei geringer Drehzahl einen hohen Schlupf aufweist,
**dadurch gekennzeichnet,**
**daß** die Kupplung (10) als Fluidkupplung ausgeführt ist mit einem Fluid hoher relativer Viskosität, in dem sich ein Kupplungsteil bewegt.

2. Antriebseinrichtung nach Anspruch 1, **dadurch gekennzeichnet, daß** das Fluid durch eine Engstelle (11) mit geringem Strömungsquerschnitt, vorzugsweise mehrere Engstellen (11) mit jeweils geringem Strömungsquerschnitt gepreßt wird.

3. Antriebseinrichtung nach Anspruch 1 oder 2, **dadurch gekennzeichnet, daß** das Fluid zähflüssig ist, vorzugsweise mit einer Viskosität größer als 50.000, insbesondere ca. 100.000 bis 200.000 im Temperaturbereich 120°C bis -40°C.

4. Antriebseinrichtung nach einem der Ansprüche 1 bis 3, **dadurch gekennzeichnet, daß** die Kupplung (10) ein wannenartig ausgeführtes, einen Aufnahmeraum (12) für das Fluid bildendes erstes Kupplungsteil (13) mit einem dieses schließenden Deckel (14) und ein den Aufnahmeraum (12) zentrisch durchsetzendes, nach zumindest einer Seite axial nach außen abragendes zweites Kupplungsteil (15) aufweist, und daß das zweite Kupplungsteil (15) zumindest einen im Aufnahmeraum (12) in das Fluid ragenden Flügel (17), vorzugsweise mehrere im Aufnahmeraum (12) in das Fluid ragende Flügel (17), aufweist.

5. Antriebseinrichtung nach Anspruch 4, **dadurch gekennzeichnet, daß** zwischen dem Flügel (17) bzw. den Flügeln (17) und der Wandung und/oder dem Boden und/oder der Decke des Aufnahmeraumes (12) und/oder der Wandung des zweiten Kupplungsteils (15) mindestens ein Spalt vorgesehen sind, der die Engstelle (11) bildet, vorzugsweise Spalten vorgesehen sind, die die Engstellen (11) bilden und/oder im Flügel (17) bzw. in den Flügeln (17) Öffnungen vorgesehen sind, die die Engstellen (11) bilden.

6. Antriebseinrichtung nach Anspruch 4 oder 5, **dadurch gekennzeichnet, daß** das zweite Kupplungsteil (15) eine kreisscheibenförmige Tragplatte (18) und davon etwa axial aufragende, etwa radial ausgerichtete Flügel (17) aufweist.

## Claims

1. Driving device for a motor-vehicle door lock or the like, with a motor, in particular electric-motor, drive (1) and a gear mechanism (3) with an input side and with an output side, from which an actuating lever (8) or the like of a lock mechanism can be driven, a coupling (10) with a variable degree of coupling, which has a high degree of coupling at a high rotational speed and a low degree of coupling at a low rotational speed, being arranged between the input side and the output side of the gear mechanism (3), the coupling (10) being of non-positive design and having a low slip at a high rotational speed and a high slip at a low rotational speed, **characterized in that** the coupling (10) is embodied as a fluid coupling with a fluid of high relative viscosity, in which one coupling part moves.

2. Driving device according to Claim 1, **characterized in that** the fluid is forced through a constriction (11) with a small cross section of flow, preferably a plurality of constrictions (11), each with a small cross section of flow.

3. Driving device according to Claim 1 or 2, **characterized in that** the fluid is viscous, preferably with a viscosity greater than 50,000, in particular about 100,000 to 200,000 in a temperature range of 120°C to -40°C.

4. Driving device according to one of Claims 1 to 3, **characterized in that** the coupling (10) has a first coupling part (13), which is of trough-shaped design, forms a holding space (12) for the fluid and has a cover (14), which closes the first coupling part, and a second coupling part (15), which passes centrally through the holding space (12) and projects axially outwards towards at least one side, and **in that** the second coupling part (15) has at least one vane (17), which projects into the fluid in the holding space (12), preferably a plurality of vanes (17) projecting into the fluid in the holding space (12).

5. Driving device according to Claim 4, **characterized in that** at least one gap, which forms the constriction (11), is provided between the vane (17) or vanes (17) and the wall and/or the base and/or the top of the holding space (12) and/or the wall of the second coupling part (15), gaps that form the constrictions (11) are preferably provided, and/or openings that form the constrictions (11) are provided in the vane (17) or vanes (17).

6. Driving device according to Claim 4 or 5, **characterized in that** the second coupling part (15) has a supporting plate (18) in the form of a circular disc and vanes (17) that project upwards approximately axially from the said plate and are aligned approximately radially.

## Revendications

1. Installation d'entraînement pour une serrure de porte de véhicule ou installation analogue comprenant :
- un entraînement à moteur (1) notamment un moteur électrique, et
- une transmission (3) avec un côté menant et un côté mené qui entraîne par un levier d'actionnement (8) ou analogue, un mécanisme de serrure,
entre le côté menant et le côté mené de la transmission (3), un embrayage (10) à caractéristique d'embrayage variable qui présente un degré d'embrayage élevé à vitesses de rotation élevées et un degré d'embrayage faible à vitesses de rotation faibles, l'embrayage (10) étant réalisé avec une liaison par la force et présentant à vitesse de rotation élevée, un patinage faible, et à vitesse, de rotation faible, un patinage élevé,
**caractérisée en ce que**
l'embrayage (10) est un embrayage à fluide avec un fluide de forte viscosité dans lequel se déplace une pièce de l'embrayage.

2. Installation d'entraînement selon la revendication 1,
**caractérisée en ce que**
le fluide est pressé à travers un passage étroit (11) de faible section et de préférence à travers plusieurs passages étroits (11) avec chacun une faible section.

3. Installation selon la revendication 1 ou 2,
**caractérisée en ce que**
le fluide est très peu fluide et a de préférence une viscosité supérieure à 50.000 notamment de l'ordre de 100.000 à 200.000 dans une plage de température comprise entre -40°C-120°C.

4. Installation selon l'une quelconque des revendications 1 à 3,
**caractérisée en ce que**
l'embrayage (10) comporte une première partie d'embrayage (13) formant une cavité (12) en forme de cuvette pour le fluide, fermée par un couvercle (14), et une seconde partie d'embrayage (15) traversant au centre de la cavité (12), et dépassant axialement vers l'extérieur au moins d'un côté, cette seconde partie d'embrayage (15) comportant au moins une ailette (17) venant dans le fluide dans la cavité (12), venant dans le fluide de préférence plusieurs ailettes (17) plongées dans le fluide de la cavité (12).

5. Installation d'entraînement selon la revendication 4,
**caractérisée par**
au moins un intervalle entre l'ailette (17) ou les ailettes (17) et la paroi et/ou le fond et/ou le couvercle de la cavité (12) et/ou la paroi de la seconde pièce d'embrayage (15), cet intervalle formant un passage étroit (11) de préférence des intervalles qui forment des passages étroits (11) et/ou des ouvertures prévues dans l'ailette (17) ou les ailettes (17) et constituant des passages étroits (11).

6. Installation d'entraînement selon les revendications 4 ou 5,
**caractérisée en ce que**
la seconde partie d'embrayage (15) comporte une plaque de support (18) en forme de disque circulaire munie d'ailettes (17) dirigées radialement et venant axialement en saillie.
